# FASCICULE DE BREVET EUROPEEN

(11) **EP 1 934 947 B1**
(45) Date de publication et mention de la délivrance du brevet: **09.12.2009**
(21) Numéro de dépôt: 06831244.6
(22) Date de dépôt: 28.09.2006
(51) Int. Cl.: G07C 5/08

(54) **PROCEDE D'AMELIORATION D'UN DIAGNOSTIC D'UNE EVENTUELLE DEFAILLANCE DANS UN VEHICULE**
VERFAHREN ZUR BESSEREN DIAGNOSE EINES MÖGLICHEN FAHRZEUGDEFEKTES
METHOD FOR IMPROVING DIAGNOSIS OF A POSSIBLE BREAKDOWN IN A VEHICLE

(30) Priorité: 03.10.2005 FR 0510073
(43) Date de publication de la demande: 25.06.2008
(73) Titulaire: RENAULT S.A.S., 92100 Boulogne Billancourt (FR)
(72) Inventeur: REGNARD DE LAGNY, Joseph, F-91290 La Norville (FR); BELAID, Abdelmalik, F-75020 Paris (FR)
(86) Numéro de dépôt international: PCT/FR2006/050957
(87) Numéro de publication internationale: WO 2007/042695

(56) Documents cités:
- EP-A- 1 164 551
- US-A- 5 737 711
- US-B1- 6 310 542
- US-B1- 6 343 236

## Description

La présente invention concerne les diagnostics mis en oeuvre pour déceler d'éventuelles défaillances de composants dans un véhicule, notamment automobile.

En particulier, l'invention concerne un procédé pour diagnostiquer une éventuelle défaillance d'un composant d'un véhicule comportant une étape de mémorisation d'une distance parcourue par le véhicule à un instant où un événement lié à la défaillance se produit.

Dans le cas des véhicules automobiles notamment, les moteurs sont classiquement pourvus de calculateurs permettant d'aider à une gestion des composants.

A titre d'exemple, le calculateur peut contrôler un système d'injection, une boîte de vitesse automatique, etc.

On sait par ailleurs, qu'un tel calculateur peut aussi être utilisé dans le cadre du diagnostic précité.

On notera à titre préliminaire que l'on désigne généralement un diagnostic mis en oeuvre par le véhicule par diagnostic embarqué.

Il s'agit en particulier de réaliser des tests à partir notamment de mesures et de détecter d'éventuels défauts de fonctionnement de composants lors de l'utilisation courante du véhicule.

Le diagnostic embarqué se distingue généralement du diagnostic débarqué, lequel, de façon connue, est mis en oeuvre par le réparateur, de préférence une fois après avoir analysé le diagnostic embarqué, éventuellement à l'aide d'un appareil d'aide au diagnostic.

Il s'agit en particulier pour ce réparateur de prendre une décision sur la stratégie à adopter au sujet d'une éventuelle intervention.

De manière générale, lorsqu'une défaillance dans le véhicule apparaît pour la première fois, le calculateur commande l'enregistrement de cet événement dans une mémoire non volatile.

Généralement, l'événement est associé dans la mémoire à un code identifiant la défaillance.

Ainsi à la lecture de cette mémoire, le procédé pour diagnostiquer est apte à reconnaître le composant défaillant dans l'ensemble du véhicule.

Au vu de ce diagnostic, si le danger que représente la défaillance pour le véhicule et/ou les passagers est important, le calculateur peut éventuellement commander une action d'urgence (par exemple l'affichage d'une demande d'arrêt d'urgence).

Au contraire, si la défaillance représente un danger faible, le calculateur n'engage généralement aucune action perceptible par l'utilisateur jusqu'à ce qu'un garagiste, analysant le diagnostic embarqué, repère la défaillance et remette alors le composant en état (diagnostic débarqué).

Un problème lié à ce procédé est que l'information donnée par le diagnostic embarqué, le code de la défaillance en l'occurrence, est relativement pauvre, ce qui limite la qualité du diagnostic débarqué et donc les possibilités d'action et/ou de réaction.

A titre d'exemple, le diagnostic embarqué ne sait pas différencier une défaillance permanente d'une défaillance intermittente, c'est-à-dire qui apparaît puis disparaît au moins une fois.

Par voie de conséquence, un tel défaut d'information peut limiter le diagnostic du réparateur (diagnostic débarqué) et ainsi pénaliser l'efficacité de son travail.

Afin de pallier à ces inconvénients, on connaît un procédé dans lequel on mémorise, en plus du code de la défaillance, la distance parcourue à l'instant où le premier événement a eu lieu.

On notera ici que dans un langage courant, la distance parcourue correspond au kilométrage du véhicule.

Selon ce procédé, on peut mémoriser le kilométrage absolu, ou encore kilométrage totalisé, c'est-à-dire celui relevé lors de l'apparition de la défaillance.

Il peut aussi mémoriser le kilométrage relatif, à savoir celui relevé depuis ladite apparition.

A cet égard, il est de nos jours de plus en plus simple d'accéder au kilométrage absolu du véhicule.

En effet, les calculateurs des systèmes de contrôle d'un groupe motopropulseur modernes utilisent généralement comme donnée la vitesse instantanée du véhicule et reconstituent le kilométrage absolu au moyen d'une intégration temporelle de cette vitesse.

Disposer du kilométrage absolu ou relatif dans la mémoire offre l'avantage d'augmenter la quantité d'informations relatives à la défaillance puisque l'on dispose en outre d'une datation de l'apparition de cette défaillance.

Bien qu'ayant rendu de nombreux services, un tel procédé demeure toutefois limité.

Dans EP-A-1164551, il est prévu de diagnostiquer une éventuelle défaillance d'un composant d'un véhicule en recourant à une première étape de mémorisation d'une première distance parcourue par le véhicule.

Toutefois, et en particulier, l'information mémorisée demeure encore insuffisante lorsque l'on souhaite, ce qui est de plus en plus le cas, augmenter la qualité des diagnostics.

A titre d'exemple, il peut être intéressant d'évaluer si une défaillance qui a finalement disparue a pu ou pourrait encore provoquer d'autres défaillances dans le véhicule.

Mais, comme on l'aura compris, le procédé utilisant la simple datation précitée, et plus généralement les procédés de l'art antérieur, ne permettent pas de rendre un quelconque diagnostic à ce sujet.

Un but de l'invention est de pallier au moins aux inconvénients précités. A cet effet, on propose selon l'invention un procédé pour diagnostiquer une défaillance d'un composant d'un véhicule, **caractérisé en ce qu**'on mémorise ladite première distance à un instant où un événement lié à la défaillance se produit, et le procédé comporte également une deuxième étape où :
- on mémorise au moins une autre distance parcourue, puis,
- on établit le diagnostic à partir des dites distances parcourues mémorisées.

Des aspects préférés, mais non limitatifs du procédé selon l'invention sont les suivantes :
- l'une des distances mémorisées au moins est une distance absolue
- l'une des distances mémorisées au moins est une distance relative ;
- on mémorise ladite autre distance à un instant où un autre événement lié à la défaillance se produit ;
- ledit autre événement est sélectionné dans le groupe suivant:

- disparition de la défaillance,
- nouvelle apparition de la défaillance alors qu'elle avait disparue ;
- ladite autre distance mémorisée correspond à un calcul de la distance totale parcourue en présence de la défaillance ;
- la défaillance est diagnostiquée comme auto-réparée si la distance totale parcourue en présence de la défaillance est inférieure à un seuil prédéterminé ;
- on mémorise un code permettant d'identifier la défaillance, en plus de ladite autre distance parcourue.

On propose en outre selon l'invention un calculateur pour véhicule comportant un jeu d'instructions pour diagnostiquer une éventuelle défaillance d'un composant d'un véhicule, le jeu d'instructions étant adapté pour qu'une première distance parcourue par le véhicule puisse être mémorisée, **caractérisé en ce que** le jeu d'instructions est adapté :
- à ce que ladite première distance parcourue par le véhicule puisse être mémorisée à un instant où un événement lié à la défaillance du composant se produit,
- à ce qu'une autre distance parcourue soit mémorisée,
- et à ce qu'on établisse ensuite le diagnostic à partir des dites distances parcourues mémorisées.

On propose aussi un moteur comprenant un tel calculateur ainsi qu'un système d'aide au diagnostic composé du moteur et d'un appareil d'aide au diagnostic externe à ce moteur.

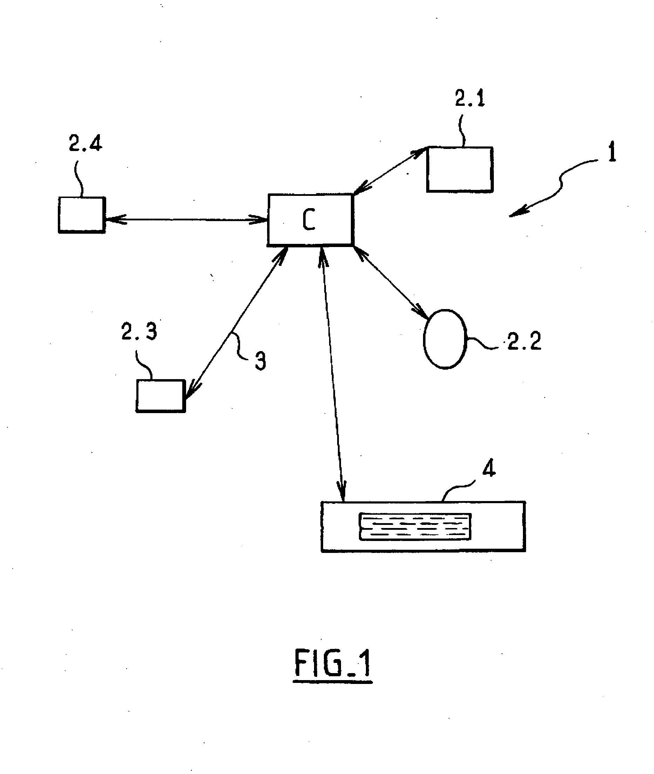

D'autres aspects, buts et avantages de l'invention apparaîtront mieux à la lecture de la description suivante de l'invention, faite en référence au dessin annexé sur lequel la figure 1 illustre un moteur 1 de l'invention comportant un calculateur C coopérant avec une mémoire M et d'autres composants devant tôt ou tard être diagnostiqués.

A titre préliminaire, il est entendu ici qu'un diagnostic selon l'invention désigne d'une part un diagnostic mis en oeuvre par un réparateur ou un appareil d'aide au diagnostic généralement connecté temporairement au véhicule, et d'autre part un diagnostic mis en oeuvre par le véhicule lui-même.

Ainsi, selon l'invention, le terme diagnostic désigne indifféremment un diagnostic embarqué et débarqué.
En se référant à la figure 1, on a représenté un moteur 1 selon l'invention.

Le moteur comporte un calculateur C qui échange des informations avec une mémoire M,

Par ailleurs, le calculateur coopère avec d'autres composants du moteur désignés, notamment par les références 2.1 à 2.4, pour qu'un diagnostic selon l'invention puisse être mis en oeuvre.

La référence 2.1 représente par exemple un système d'injection de carburant tandis que la référence 2.2 est une boîte de vitesse.

Le moteur échange également des informations avec un appareil d'aide au diagnostic 4 constituant une interface d'échange avec le réparateur.

L'appareil comporte à titre non limitatif un écran sur lequel le réparateur peut prendre connaissance du diagnostic élaboré directement par le moteur.

Mais l'appareil peut également contribuer lui-même à l'élaboration du diagnostic, notamment par analyse d'informations fournies par le véhicule.

Bien entendu le moteur de l'invention n'est nullement limité à la représentation qui en est faite sur cette figure.

En particulier, les lignes de liaison terminées par des flèches peuvent indiquer de manière générale un échange d'informations entre les composants pointés aux extrémités de ces flèches.

Dans ce cas, ces échanges peuvent être effectués de différentes manières connues en soi.

A titre d'exemple non limitatif, la liaison 3 peut représenter un échange par voie filaire entre le calculateur et le composant 2.3 ou encore une liaison sans fil.

Dans l'un ou l'autre cas, la liaison 3 est assurée au moyen d'autres composants du moteur non représentés sur la figure (par exemple une interface de communication sans fil, etc.).

Le calculateur comporte un jeu d'instructions apte à mettre en oeuvre le procédé selon l'invention.

Le procédé permet de diagnostiquer une éventuelle défaillance d'un ou plusieurs composants, tels que les composants 2.1-4, en stockant dans la mémoire M une distance parcourue par le véhicule à un instant où la défaillance se produit.

Cette première distance, qui peut être relative ou absolue, constitue une première datation de l'événement considéré.

Afin de lier cette distance spécifiquement au composant défaillant, un code identifiant de ce dernier peut également être stocké dans la mémoire.

Bien entendu, d'autres techniques de mémorisation peuvent aussi être utilisées.

Par exemple, l'identification du composant défaillant peut se faire en utilisant directement les indices d'une matrice dans laquelle toutes les distances des composants défaillants sont enregistrées.

En tous les cas, on est toujours capable de retrouver ultérieurement la distance mémorisée d'un composant défaillant identifié.
Selon l'invention, une autre distance parcourue par le véhicule est mémorisée.

Selon un aspect de l'invention on mémorise ladite autre distance à un instant où un autre événement lié à une défaillance se produit.

Dans ce cas, le calculateur met en oeuvre une datation supplémentaire de la défaillance de sorte à fournier une information supplémentaire utile au diagnostic.

A titre d'exemple non limitatif, si la défaillance disparaît d'elle-même, c'est-à-dire sans l'intervention d'un réparateur, la distance parcourue du véhicule à l'instant où cet événement a lieu est, elle aussi, enregistrée dans la mémoire.

Plus précisément, il en sera ainsi à chaque fois qu'un événement du type sélectionné dans le groupe suivant se produit :
- disparition de la défaillance,
- nouvelle apparition de la défaillance alors qu'elle avait disparue.

Le diagnostic est alors amélioré au sens notamment où l'on peut établir diverses stratégies d'intervention selon les valeurs de toutes les distances parcourues mémorisées liées à la défaillance.

Selon le cas d'espèce, ces stratégies d'intervention peuvent être prises en charge par le véhicule, notamment le calculateur, par le réparateur voire même les deux.

Selon un aspect de l'invention on considère que la défaillance s'est auto-réparée si elle a disparu depuis un kilométrage supérieur à une valeur seuil prédéterminée.

Ce diagnostic particulier est basé notamment sur le principe que si une défaillance a disparu depuis un kilométrage important, on peut raisonnablement considérer qu'elle s'est réparée d'elle-même.

Par exemple, cela peut correspondre à un cas où le composant s'était encrassé si bien qu'il fonctionnait mal, et la poussière a finalement disparu.

Dans un autre cas, il pourrait s'agir d'un blocage passager du composant.

Selon une variante, si la défaillance a disparu depuis un kilométrage supérieur à la valeur seuil prédéterminée, on considère que la défaillance est réparée par ce qu'un utilisateur ou un réparateur non équipé d'un appareil d'aide au diagnostic a remis lui-même le composant en état.

Dans ce cas, le réparateur muni de l'appareil d'aide au diagnostic pourra simplement effacer de la mémoire l'événement lié à la défaillance en question.

Selon un autre aspect de l'invention, on calcule et mémorise la distance totale parcourue en présence de la défaillance.

A cet effet, on dispose en mémoire de toutes les distances mémorisées lors de l'apparition et de la disparition de cette défaillance.

Il est donc aisé d'en déduire ladite distance totale parcourue par une mise en oeuvre évidente d'opérations du type addition et soustraction.

On considère alors que, si la distance calculée est inférieure à un seuil prédéterminé, le réparateur n'a pas à se préoccuper des conséquences qu'aurait pu avoir le défaut sur le reste du véhicule.

On notera qu'un tel diagnostic peut être établi par le réparateur après avoir pris connaissance de la distance totale stockée en mémoire.

Ce diagnostic peut aussi être pris en charge par le calculateur ou l'appareil d'aide au diagnostique, lesquels sont agencés pour que le réparateur soit informé, typiquement par l'écran, de l'action à mener (en l'occurrence dans cet exemple : « ne pas se préoccuper des conséquences qu'aurait pu avoir le défaut sur le reste du véhicule »).

Un exemple non limitatif illustrant une telle situation est le suivant.

On considère un véhicule possédant un moteur à allumage commandé dans lequel des ratés de combustion sont apparus par intermittence sur une distance totale faible, c'est-à-dire inférieure au seuil précité.

Il est alors suffisant de réparer uniquement la cause de cette défaillance.

Si au contraire, la distance totale parcourue est importante (supérieure audit seuil), il conviendra en plus de la réparation du composant en question de s'assurer par des méthodes connues du bon fonctionnement du système de traitement catalytique des gaz d'échappement du véhicule.

A cet effet, le procédé de l'invention peut comporter avantageusement une étape où l'on informe le réparateur des autres composants à diagnostiquer ou déjà diagnostiqués par exemple par le calculateur.

Bien entendu, la présente invention n'est nullement limitée à la forme de réalisation décrite ci-dessus et représentée sur les dessins.

D'autres informations peuvent venir compléter celles mentionnées ci-dessus.

En particulier, l'homme du métier comprendra que le procédé peut notamment mémoriser un numéro d'occurrence de la défaillance ou tout autre donnée permettant d'augmenter l'information et d'améliorer la qualité du diagnostic.

## Revendications

1. Procédé pour diagnostiquer une éventuelle défaillance d'un composant (2.1) d'un véhicule, ce procédé comportant une première étape de mémorisation d'une première distance parcourue par le véhicule, **caractérisé en ce qu'**on mémorise ladite première distance à un instant où un événement lié à la défaillance se produit, et le procédé comporte également une deuxième étape où :
- on mémorise au moins une autre distance parcourue, puis,
- on établit le diagnostic à partir des dites distances parcourues mémorisées.

2. Procédé selon la revendication 1, **caractérisé en ce que** l'une des distances mémorisées au moins est une distance absolue.

3. Procédé selon l'une des revendications précédentes, **caractérisé en ce que** l'une des distances mémorisées au moins est une distance relative.

4. Procédé selon l'une des revendications précédentes, **caractérisé en ce que** l'on mémorise ladite autre distance à un instant où un autre événement lié à la défaillance se produit.

5. Procédé selon la revendication 4, **caractérisé en ce que** ledit autre événement est sélectionné dans le groupe suivant :
- disparition de la défaillance,
- nouvelle apparition de la défaillance alors qu'elle avait disparue.

6. Procédé selon l'une des revendications 4 à 5, **caractérisé en ce que** ladite autre distance mémorisée correspond à un calcul de la distance totale parcourue en présence de la défaillance.

7. Procédé selon l'une des revendications 4 à 6, **caractérisé en ce que** la défaillance est diagnostiquée comme auto-réparée si la distance totale parcourue en présence de la défaillance est inférieure à un seuil prédéterminé.

8. Procédé selon l'une des revendications précédentes, **caractérisé en ce que** l'on mémorise un code permettant d'identifier la défaillance, en plus de ladite autre distance parcourue.

9. Calculateur (C) pour véhicule comportant un jeu d'instructions pour diagnostiquer une éventuelle défaillance d'un composant (2.1) d'un véhicule, le jeu d'instructions étant adapté pour qu'une première distance parcourue par le véhicule puisse être mémorisée, **caractérisé en ce que** le jeu d'instructions est adapté :
- à ce que ladite première distance parcourue par le véhicule puisse être mémorisée à un instant où un événement lié à la défaillance du composant se produit,
- à ce qu'une autre distance parcourue soit mémorisée,
- et à ce qu'on établisse ensuite le diagnostic à partir des dites distances parcourues mémorisées.

10. Moteur (1) comprenant un calculateur tel que défini par la revendication 9 et des moyens de mémorisations aptes à mémoriser les distances parcourues.

## Claims

1. Method for diagnosing a possible fault of a component (2.1) of a vehicle, this method comprising a first step of storing a first distance travelled by the vehicle, **characterized in that** the said first distance is stored at a time when an event associated with the fault occurs, and the method also comprises a second step in which:
- at least one other distance travelled is stored, then
- the diagnosis is made based on the said stored distances travelled.

2. Method according to Claim 1, **characterized in that** at least one of the distances stored is an absolute distance.

3. Method according to either of the preceding claims, **characterized in that** at least one of the distances stored is a relative distance.

4. Method according to one of the preceding claims, **characterized in that** the said other distance is stored at a time when another event associated with the fault occurs.

5. Method according to Claim 4, **characterized in that** the said other event is selected from the following group:
- disappearance of the fault,
- reappearance of the fault although it had disappeared.

6. Method according to either of Claims 4 and 5, **characterized in that** the said other distance stored corresponds to a computation of the total distance travelled in the presence of the fault.

7. Method according to one of Claims 4 to 6,
**characterized in that** the fault is diagnosed as having repaired itself if the total distance travelled in the presence of the fault is less than a predetermined threshold.

8. Method according to one of the preceding claims, **characterized in that** a code is stored making it possible to identify the fault, in addition to the said other distance travelled.

9. Computer (C) for a vehicle comprising an instruction set for diagnosing a possible fault of a component (2.1) of a vehicle, the instruction set being adapted so that a first distance travelled by the vehicle can be stored, **characterized in that** the instruction set is adapted:
- so that the said first distance travelled by the vehicle can be stored at a time when an event associated with the fault of the component occurs,
- so that another distance travelled is stored,
- and so that the diagnosis based on the said stored distances travelled is subsequently made.

10. Engine (1) comprising a computer as defined by Claim 9, and storage means capable of storing the distances travelled.

## Patentansprüche

1. Verfahren zur Diagnose eines möglichen Ausfalls eines Bauteils (2.1) eines Fahrzeugs, wobei dieses Verfahren einen ersten Schritt des Speicherns einer ersten von dem Fahrzeug zurückgelegten Entfernung aufweist, **dadurch gekennzeichnet, dass** die erste Entfernung in einem Zeitpunkt gespeichert wird, in dem ein mit dem Ausfall verbundenes Ereignis auftritt, und das Verfahren ebenfalls einen zweiten Schritt aufweist, in dem:
- mindestens eine andere zurückgelegte Entfernung gespeichert wird, dann
- die Diagnose ausgehend von den gespeicherten zurückgelegten Entfernungen erstellt wird.

2. Verfahren nach Anspruch 1, **dadurch gekennzeichnet, dass** mindestens eine der gespeicherten Entfernungen eine absolute Entfernung ist.

3. Verfahren nach einem der vorhergehenden Ansprüche, **dadurch gekennzeichnet, dass** mindestens eine der gespeicherten Entfernungen eine relative Entfernung ist.

4. Verfahren nach einem der vorhergehenden Ansprüche, **dadurch gekennzeichnet, dass** die andere Entfernung in einem Zeitpunkt gespeichert wird, in dem ein anderes mit dem Ausfall verbundenes Ereignis auftritt.

5. Verfahren nach Anspruch 4, **dadurch gekennzeichnet, dass** das andere Ereignis aus der folgenden Gruppe ausgewählt wird:
- Verschwinden des Ausfalls,
- erneutes Auftreten des Ausfalls, nachdem er verschwunden war.

6. Verfahren nach einem der Ansprüche 4 bis 5,
**dadurch gekennzeichnet, dass** die andere gespeicherte Entfernung einer Berechnung der in Gegenwart des Ausfalls zurückgelegten Gesamtentfernung ist.

7. Verfahren nach einem der Ansprüche 4 bis 6,
**dadurch gekennzeichnet, dass** der Ausfall als selbst-repariert diagnostiziert wird, wenn die in Gegenwart des Ausfalls zurückgelegte Gesamtentfernung geringer als ein vorbestimmter Schwellwert ist.

8. Verfahren nach einem der vorhergehenden Ansprüche, **dadurch gekennzeichnet, dass** zusätzlich zu der anderen zurückgelegten Entfernung ein Code gespeichert wird, der es ermöglicht, den Ausfall zu identifizieren.

9. Rechner (C) für ein Fahrzeug, der einen Befehlssatz aufweist, um einen möglichen Ausfall eines Bauteils (2.1) eines Fahrzeugs zu diagnostizieren, wobei der Befehlssatz geeignet ist, damit eine erste vom Fahrzeug zurückgelegte Entfernung gespeichert werden kann, **dadurch gekennzeichnet, dass** der Befehlssatz geeignet ist:
- damit die erste vom Fahrzeug zurückgelegte Entfernung in einem Zeitpunkt gespeichert werden kann, in dem ein mit dem Ausfall des Bauteils verbundenes Ereignis auftritt,
- damit eine andere zurückgelegte Entfernung gespeichert wird,
- und damit anschließend die Diagnose ausgehend von den gespeicherten zurückgelegten Entfernungen erstellt wird.

10. Motor (1), der einen wie durch Anspruch 9 definierten Rechner und Speichereinrichtungen enthält, die die zurückgelegten Entfernungen speichern können.
